(19) Europäisches Patentamt
European Patent Office
Office européen des brevets

(11) Numéro de publication : **0 302 922 B1**

(12) **FASCICULE DE BREVET EUROPEEN**

(45) Date de publication du fascicule du brevet :
**21.08.91 Bulletin 91/34**

(51) Int. Cl.$^5$ : **B29C 53/14, B29C 47/00**

(21) Numéro de dépôt : **88901864.4**

(22) Date de dépôt : **17.02.88**

(86) Numéro de dépôt international :
**PCT/FR88/00087**

(87) Numéro de publication internationale :
**WO 88/06089 25.08.88 Gazette 88/19**

(54) **DISPOSITIF POUR LA FABRICATION EN CONTINU PAR EXTRUSION D'UN TUBE POURVU DE FILETS HELICOIDAUX.**

(30) Priorité : **18.02.87 FR 8702050**

(43) Date de publication de la demande :
**15.02.89 Bulletin 89/07**

(45) Mention de la délivrance du brevet :
**21.08.91 Bulletin 91/34**

(84) Etats contractants désignés :
**DE FR GB SE**

(56) Documents cités :
**DE-A- 570 554**
**DE-A- 2 507 186**
**FR-A- 1 517 461**
**FR-A- 2 014 626**
**FR-A- 2 173 100**

(56) Documents cités :
**FR-A- 2 196 954**
**GB-A- 1 377 401**
**US-A- 2 871 911**
**US-A- 3 234 312**
**US-A- 3 630 058**
**US-A- 4 289 465**

(73) Titulaire : **S.A. RACCORDS ET PLASTIQUES NICOLL**
**Rue Pierre et Marie Curie B.P. 966**
**F-49309 Cholet Cédex (FR)**

(72) Inventeur : **BLANDIN, Jean, Claude**
**3, allée des Criquets**
**Mazières F-49300 Cholet (FR)**

(74) Mandataire : **Poulin, Gérard et al**
**Société BREVATOME 25, rue de Ponthieu**
**F-75008 Paris (FR)**

EP 0 302 922 B1

## Description

L'invention concerne un dispositif permettant de fabriquer en continu, par extrusion, un tube pourvu de filets hélicoïdaux sur sa surface intérieure.

Un tel dispositif peut notamment être utilisé pour fabriquer des tubes pour chute hydraulique d'immeuble à écoulement giratoire auto-ventilé, tels que décrits dans le document FR-A-2251673. Selon ce document, pour assurer un écoulement unitaire, gravitaire et sans ventilation secondaire des différents effluents issus d'appareil domestiques multiples, on dote l'intérieur du tube de filets hélicoïdaux à profil triangulaire, afin d'entraîner en giration les effluents le long de la paroi du tube et de ménager ainsi un noyau d'air central indispensable pour éviter le désamorçage des siphons.

Selon le document GB-A-1377401 qui décrit un dispositif selon le préambule de la revendication 1, ce genre de produits peut être réalisé industriellement en exerçant à la fois un effort de traction et un effort de rotation sur l'ébauche de tube sortant de la filière de l'extrudeuse, au moyen d'une ou plusieurs paires de rouleaux entraînés en rotation et disposés en des emplacements diamétralement opposés de part et d'autre de l'ébauche. Les axes de ces rouleaux étant inclinés par rapport à l'axe de l'ébauche, leur rotation applique simultanément sur l'ébauche un effort de traction et un couple qui fait tourner l'ébauche sur elle-même.

Ce dispositif connu a pour inconvénient que l'entraînement en translation et en rotation de l'ébauche de tube est assuré par roulement en exerçant un effort de friction sur ce dernier. Il existe donc un risque non négligeable de glissement relatif entre l'ébauche et les rouleaux, qui se traduit par une très mauvaise précision dans les cotes du tube ainsi fabriqué.

Par ailleurs, il est connu notamment du document FR-A-2196954 d'exercer un effort de traction sur une ébauche de tube sortant de la filière d'une extrudeuse, au moyen d'un dispositif de préhension pneumatique animé d'un mouvement d'avance selon l'axe du tube. Ce document prévoit également l'utilisation simultanée de deux dispositifs de préhension afin d'assurer l'avance de l'ébauche en continu. Cependant, il ne décrit ni ne suggère aucun moyen permettant de superposer à l'effort de traction ainsi exercé sur le tube un effort de rotation indispensable à la réalisation de filets hélicoïaux sur le tube extrudé.

L'invention a précisément pour objet un dispositif permettant de fabriquer en continu par extrusion un tube pourvu de filets hélicoïdaux, ne présentant pas les inconvénients du dispositif décrit dans le document GB-A-1377401 et permettant notamment d'obtenir une précision beaucoup plus grande.

A cet effet, il est proposé un dispositif pour la fabrication en continu d'un tube pourvu de filets hélicoïdaux, comprenant une extrudeuse pourvue d'une filière de section complémentaire de la section du tube à fabriquer, et un moyen de traction-rotation pour exercer simultanément sur une ébauche de tube sortant de la filière un effort de traction et un effort de rotation, caractérisé par le fait que le moyen de traction-rotation comprend au moins deux dispositifs de préhension aptes à être en prise ou dégagés de l'ébauche, un moyen de translation apte à animer chaque dispositif de préhension d'un mouvement de translation alternatif selon l'axe de l'ébauche, un moyen de rotation assurant une rotation de chaque dispositif de préhension autour de l'axe de l'ébauche lors d'une phase de tirage du mouvement de translation, et un moyen de commande des dispositifs de préhension et des moyens de translation, dont un actionnement assure que l'un au moins des dispositifs de préhension est en permanence en prise sur l'ébauche et en phase de tirage du mouvement de translation.

De préférence, le moyen de traction-rotation comprend un bâti pourvu de moyens de guidage d'au moins deux supports parallèlement à l'axe de l'ébauche, chaque dispositif de préhension étant monté rotatif sur l'un des supports autour de l'axe de l'ébauche, les moyens de translation agissant sur les supports et les moyens de rotation étant interposés entre le bâti et chacun des dispositifs de préhension.

Les moyens de rotation peuvent notamment comprendre une crémaillère liée au bâti, un pignon monté sur chaque support et engréné sur la crémaillère, et une chaîne cinématique transformant une rotation de chaque pignon en une rotation du dispositif de préhension monté sur le même support.

Par ailleurs, les moyens de translation comprennent de préférence un organe moteur unique pourvu d'un arbre de sortie dont une rotation est transformée en un déplacement de chaque support le long des moyens de guidage dans un sens de tirage de l'ébauche, par une chaîne cinématique comprenant un embrayage. Chaque moyen de translation comprend de plus un vérin interposé entre le bâti et l'un des supports et dont un actionnement commande un déplacement de ce support le long des moyens de guidage dans un sens opposé au tirage de l'ébauche.

Ainsi, le moyen de commande peut commander simultanément l'organe moteur, les dispositifs de préhension, les embrayages et les vérins, ainsi qu'un variateur de vitesse associé à l'organe moteur, en fonction du débit de l'extrudeuse.

Enfin, chacun des dispositifs de préhension comporte de préférence un manchon élastique actionné pneumatiquement, de façon à pouvoir entraîner le tube sans glissement.

L'invention sera mieux comprise à l'aide de la description qui suit d'un exemple non limitatif, faite en référence aux dessins annexés, dans lesquels :

— la figure 1 est une vue générale représentant schématiquement, en vue de côté, un dispositif de fabrication de tubes par extrusion conforme à l'invention ;

— la figure 2 est une vue de côté représentant à plus grande échelle le dispositif de traction-rotation selon l'invention ;

— la figure 3 est une vue de dessus représentant schématiquement une partie du dispositif de la figure 2 ;

— la figure 4 est une vue en coupe représentant schématiquement le dispositif de découpe placé en aval du dispositif de traction-rotation ; et

— la figure 5 est une vue en perspective éclatée du produit obtenu.

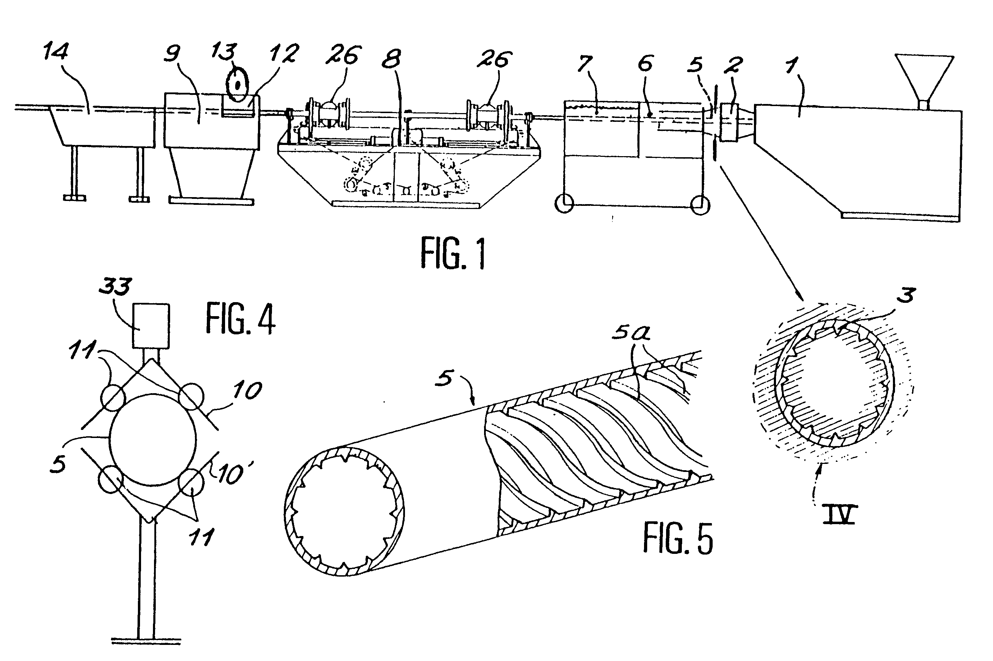

Le dispositif permettant de fabriquer en continu par extrusion un tube plastique 5 pourvu intérieurement de filets hélicoïdaux 5a tel que représenté sur la figure 5, est illustré très schématiquement sur la figure 1. Ce dispositif comprend une extrudeuse 1 classique pourvue d'une filière annulaire 2 dotée de crans 3 comme représenté sur la section IV de la figure 1. Les crans 3 de la filière sont destinés à matérialiser les filets à l'intérieur de l'ébauche de tube 5 sortant de la filière.

Une fois extrudée, l'ébauche de tube 5 est soumise simultanément à un effort de traction et à un effort de rotation exercés par une tireuse unique 8, au travers d'un conformateur sous vide 6 puis d'un bassin d'eau 7 permettant la solidification de la matière plastique extrudée. La tireuse 8 entraîne à la fois en traction et en rotation l'ébauche de tube 5 vers un ensemble de sciage 9.

Comme l'illustre plus précisément la figure 4, l'ensemble de sciage 9 comprend un sabot supérieur 10 et un sabot inférieur 10', en forme de V, disposés de part et d'autre de l'ébauche de tube 5 et équipés tous deux de galets 11 libres en rotation, de façon à être en contact avec la surface extérieure de l'ébauche de tube 5. Les sabots 10 et 10' sont montés sur un chariot 12 portant la lame de scie 13 de l'ensemble de sciage 9, comme le montre la figure 1. Un vérin 33 permet de manoeuvrer le sabot supérieur 10, lorsqu'un ordre de coupe est donné, pour assurer l'engagement de friction des galets 11 contre la surface extérieure de l'ébauche 5. Les sabots 10 et 10' entraînent alors en translation le chariot 12 portant la lame 13 avec l'ébauche de tube 5, ce qui permet à la lame de scie 13 d'effectuer la découpe transversale du tube sans aucun temps mort et au fur et à mesure de la rotation et de l'avance du tube. Un déversoir 14 (figure 1) réceptionne finalement les longueurs de tubes sciés prêts au conditionnement.

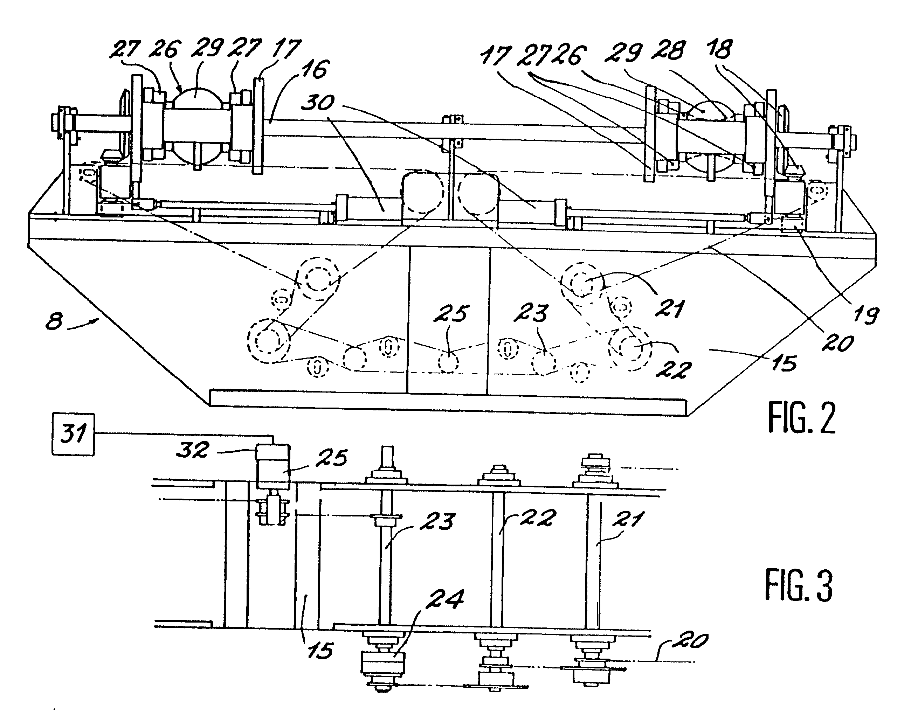

Comme représenté plus en détail sur la figure 2, la tireuse 8 qui constitue le dispositif de traction-rotation selon l'invention comprend un bâti 15 muni de deux tiges de guidage 16 orientées parallèlement à l'axe de l'ébauche de tube 5 sortant de la filière 2. Deux supports 17 sont montés de façon coulissante et indépendamment l'un de l'autre sur les tiges de guidage 16, de façon à être animés indépendamment l'un de l'autre d'un mouvement de va-et-vient le long de ces tiges, sous l'action de moyens de translation qui seront décrits ultérieurement.

Un dispositif de préhension 26 est monté rotatif sur chacun des supports 17 autour d'un axe commun qui coïncide avec l'axe de l'ébauche de tube 5. Chacun des dispositifs de préhension 26 est un dispositif à commande pneumatique pourvu d'un manchon élastique 28 qui vient s'appliquer sur la surface extérieure de l'ébauche de tube 5 sous l'effet d'une pression pneumatique dans le corps 29 du dispositif de préhension. L'adhérence ainsi obtenue entre le manchon 28 de chacun des dispositifs de préhension et l'ébauche de tube permet d'entraîner cette dernière en traction et en rotation sans aucun glissement. Le supportage rotatif de chacun des dispositifs de préhension 26 par le support 17 correspondant est assuré par l'intermédiaire de butées à billes 27.

Afin que le mouvement de tirage de l'ébauche de tube exercé alternativement par l'un et l'autre des dispositifs de préhension 26 s'accompagne d'un mouvement de rotation de cette ébauche, des moyens pour commander automatiquement cette rotation de façon précise et contrôlée sont prévus. Ces moyens comprennent une crémaillère 19 portée par le bâti 15 et orientée parallèlement à l'axe de l'ébauche de tube. Chacun des supports 17 porte deux pignons coniques 18 engrénés l'un dans l'autre, l'un de ces pignons 18 étant solidaire d'un autre pignon engréné sur la crémaillère 19 alors que l'autre pignon conique 18 est solidaire du dispositif de préhension 26 monté sur le support 17 correspondant. De cette manière, on comprend que la translation de chacun des supports 17 le long des tiges de guidage 16 s'accompagne automatiquement d'une rotation du dispositif de préhension 26 qu'il supporte, cette rotation étant régulière et bien déterminée pour une vitesse de translation précise du support.

L'entraînement de chacun des supports 17 dans le sens correspondant à la traction ou au tirage de l'ébauche de tube est assuré par un moteur principal unique 25 dont une rotation de l'arbre de sortie est transformée en une translation dans le sens correspondant au tirage de l'ébauche de tube de l'un au moins des supports 17 par une chaîne cinématique identique pour chacun de ces supports. Comme le montrent les figures 2 et 3, cette chaîne cinématique comprend, pour chacun des supports 17, un embrayage 24 ainsi qu'un ensemble de chaînes et de roues dentées portées par des arbres parallèles 21, 22 et 23 assurant la démultiplication des mouvements. Le déplacement de chacun des supports 17 est assuré par une dernière paire de chaînes 20 entraînée par une roue dentée portée par l'arbre 21 et qui est fixée sur le support 17 correspondant.

Etant donné que le moteur 25 tourne toujours dans le même sens, qui correspond au déplacement des supports 17 dans le sens du tirage de l'ébauche de tube, le déplacement en sens inverse de chacun des supports 17 est assuré par un moyen séparé. Dans l'exemple de réalisation représenté, ce moyen est constitué, pour chacun des supports 17, par un vérin 30 dont le corps est fixé sur le bâti 15 et dont la tige est orientée parallèlement à l'axe de l'ébauche de tube, l'extrémité de chaque tige de vérin étant fixée sur le support 17 correspondant.

De préférence, le moteur principal 25 est muni d'un variateur de vitesse 32 permettant d'adapter la vitesse du moteur au débit de l'extrudeuse.

Un dispositif de commande 31 constitué par un programmateur commande le moteur 25 ainsi que son variateur de vitesse 32, afin de modifier la vitesse du moteur en réponse à un signal indiquant une variation du débit de l'extrudeuse. Le programmateur 31 commande également des électrovannes (non représentées) permettant d'assurer la prise et le relâchement de l'ébauche de tube par chacun des dispositifs de préhension 26, ainsi que les embrayages 24 et les vérins 30.

Le programmateur 31 assure ainsi la synchronisation de tous les mouvements de la tireuse 8 afin que l'un des dispositifs de préhension 26 soit en permanence en prise sur l'ébauche de tube et que le support 17 portant ce dispositif de préhension se déplace simultanément dans le sens correspondant au tirage ou à la traction de cette ébauche, à une vitesse adaptée au débit de l'extrudeuse. Cela signifie que l'embrayage 24 de la chaîne cinématique assurant l'entraînement de ce support est embrayé et que le vérin 30 correspondant est au contraire neutralisé. Grâce à la crémaillère 19 et au pignon 18, ce déplacement du chariot 17 dans le sens de la traction du tube s'accompagne d'une rotation imprimée au dispositif de préhension 26 proportionnelle à l'avance du support quelle que soit la vitesse de son déplacement. Le pas des filets hélicoïdaux ainsi réalisé dans l'ébauche de tube est donc constant et indépendant de la vitesse d'extrusion.

Pendant que l'un des supports 17 se déplace ainsi pour assurer à la fois la traction et la rotation de l'ébauche de tube, l'embrayage 24 de la chaîne cinématique reliant le moteur 25 à l'autre support 17 est débrayé et le vérin 30 correspondant est actionné pour ramener en sens inverse ce support 17.

Afin d'assurer la continuité du mouvement de tirage et de rotation de l'ébauche de tube, il est à noter que le mouvement de retour des supports 17 est plus rapide que leur mouvement d'avance, de telle sorte que le dispositif de préhension 26 qui est ramené en sens inverse de l'avance de l'ébauche de tube par le vérin correspondant 30 puisse être actionné après neutralisation de ce vérin et enclenchement de l'embrayage correspondant, pour prendre le relais de l'autre dispositif de prehension avant que ce dernier n'arrive en bout de course. En d'autres termes, la continuité du mouvement de traction et de rotation du tube nécessite que les deux dispositifs de préhension soient simultanément en prise sur l'ébauche de tube pendant une courte période du cycle de fonctionnement de la tireuse 8. A l'aide de deux mouvements alternatifs discontinus, on parvient ainsi à imprimer au tube un mouvement continu permettant d'éviter toute rupture dans la fabrication.

Ainsi, grâce au dispositif décrit et notamment grâce à la parfaite synchronisation des différentes phases de fabrication du tube (extrusion, calibrage, refroidissement, torsion-rotation et sciage), il est possible de produire économiquement en continu, sans chute et surtout en faisant appel à une tireuse unique des tubes plastiques munis de filets internes hélicoïdaux réalisés avec une grande précision.

## Revendications

1. Dispositif pour la fabrication en continu d'un tube pourvu de filets hélicoïdaux sur sa surface intérieure, comprenant une extrudeuse (1) pourvue d'une filière (2) de section complémentaire de la section du tube à fabriquer, et un moyen de traction-rotation (8) pour exercer simultanément sur une ébauche de tube (5) sortant de la filière un effort de traction et un effort de rotation, caractérisé par le fait que le moyen de traction-rotation comprend au moins deux dispositifs de préhension (26) aptes à être en prise ou dégagés de la surface extérieure de l'ébauche, un moyen de translation (20-25) apte à animer chaque dispositif de préhension d'un mouvement de translation alternatif selon l'axe de l'ébauche, un moyen de rotation (18, 19) assurant une rotation de chaque dispositif de préhension autour de l'axe de l'ébauche lors d'une phase de tirage du mouvement de translation, et un moyen de commande (31) des dispositifs de préhension (26) et des moyens de translation (20-25), dont un actionnement assure que l'un au moins des dispositifs de préhension est en permanence en prise sur l'ébauche et en phase de tirage du mouvement de translation.

2. Dispositif selon la revendication 1, caractérisé par le fait que le moyen de traction-rotation comprend un bâti (15) pourvu de moyens de guidage (16) d'au moins deux supports (17) parallèlement à l'axe de l'ébauche, chaque dispositif de préhension (26) étant monté rotatif sur l'un des supports (17), les moyens de translation (20-25) agissant sur les supports (17) et les moyens de rotation (18, 19) étant interposés entre le bâti (15) et chacun des dispositifs de préhension (26).

3. Dispositif selon la revendication 2, caractérisé par le fait que les moyens de rotation comprennent une crémaillère (19) liée au bâti (15), un pignon monté sur chaque support (17) et engréné sur la crémaillère, et une chaîne cinématique (18) transformant une rotation de chaque pignon en une rotation du dispositif de préhension (26) monté sur le même support.

4. Dispositif selon l'une quelconque des revendications 2 et 3, caractérisé par le fait que les moyens de translation comprennent un organe moteur unique (25) pourvu d'un arbre de sortie dont une rotation est transformée en un déplacement de chaque support (17) le long des moyens de guidage (16) dans un sens de tirage de l'ébauche, par une chaîne cinématique (20-24) comprenant un embrayage (24).

5. Dispositif selon l'une quelconque des revendications 2 à 4, caractérisé par le fait que chaque moyen de translation comprend un vérin (30) interposé entre le bâti (15) et l'un des supports (17) et dont un actionnement commande un déplacement de ce support le long des moyens de guidage (16) dans un sens opposé au tirage de l'ébauche.

6. Dispositif selon les revendications 4 et 5, caractérisé par le fait que le moyen de commande (31) commande l'organe moteur (25), les dispositifs de préhension (26), les embrayages (24) et les vérins (30).

7. Dispositif selon la revendication 6, caractérisé par le fait que le moyen de commande (31) commande également un variateur de vitesse associé à l'organe moteur (25), en fonction du débit de l'extrudeuse (1).

8. Dispositif selon l'une quelconque des revendications 1 à 7, caractérisé par le fait que chacun des dispositifs de préhension (26) comporte un manchon élastique (28) actionné pneumatiquement.

9. Dispositif selon l'une quelconque des revendications 1 à 8, caractérisé par le fait qu'il comprend de plus, en aval du moyen de traction-rotation (8), un ensemble de sciage (9) comportant une lame de scie (13) portée par un chariot (12) mobile selon l'axe de l'ébauche de tube (5), le chariot étant équipé d'un moyen (33) pour amener en engagement de friction contre l'ébauche des galets (11) portés par des sabots (10, 10') montés sur le chariot.

## Patentansprüche

1. Vorrichtung zum kontinuierlichen Herstellen eines auf seiner inneren Oberfläche mit Spiralgewinden versehenen Rohrs, die einen Extruder (1), der mit einem Gewindeschneider (2) mit einem zum Querschnitt des herzustellenden Rohr komplementären Querschnitt versehen ist, und eine Zieh-Drehvorrichtung (8) umfaßt, um gleichzeitig auf einen Rohrrohling (5), der aus dem Gewindeschneider herausragt, eine Zug- und Rotationskraft auszuüben, gekennzeichnet durch die Tatsache, daß die Zieh-Drehvorrichtung wenigstens zwei Greifvorrichtungen (26), die geeignet sind, die äußere Oberfläche des Rohling zu greifen oder loszulassen, eine Translationsvorrichtung (20-25), die geeignet ist, jede Greifvorrichtung mit einer hin- und hergehenden Translationsbewegung entlang der Achse des Rohlings zu versehen, eine Drehvorrichtung (18, 19), die eine Rotation je der Greifvorrichtung um die Achse des Rohlings während der Ziehphase der Translationsbewegung sicherstellt, und eine Steuervorrichtung (31) für die Greifvorrichtungen (26) und die Translationsvorrichtungen (20-25) umfaßt, von der ein Betrieb sicherstellt, daß wenigstens eine der Greifvorrichtungen permanent den Rohling greift und in Zugphase mit der Translationsbewegung ist.

2. Vorrichtung nach Anspruch 1, gekennzeichnet durch die Tatsache, daß die Zieh-Drehvorrichtung ein Gestell (15) um faßt, das mit Führungsvorrichtungen (16) aus wenigsten zwei Stützen (17) parallel zur Achse des Rohlings versehen ist, wobei jede Greifvorrichtung (26) drehbar auf einer der Stützen (17) montiert ist, wobei die Translationsvorrichtungen (20-25) auf die Stützen (17) und wobei die Drehvorrichtungen (18, 19) zwischen dem Gestell und jeder der Greifvorrichtungen (26) angeordnet sind.

3. Vorrichtung nach Anspruch 2, gekennzeichnet durch die Tatsache, daß die Drehvorrichtungen eine mit dem Gestell (15) verbundene Zahnstange (19), ein auf jeder Stütze (17) montiertes und mit der Zahnstange verzahntes Ritzel und eine kinematische Kette (18) umfaßt, die eine Drehung jedes Ritzels in eine Drehung der auf derselben Stütze montierten Greifvorrichtung (26) umwandelt.

4. Vorrichtung nach einem der Ansprüche 2 und 3, gekennzeichnet durch die Tatsache, daß die Translationsvorrichtungen ein einziges Motorelement (25) umfassen, das mit einer Ausgangswelle versehen ist, dessen Rotation durch eine kinematische Kette (20-24) mit einer Kupplung (24) in eine Bewegung jeder Stütze (17) entlang der Führungsvorrichtungen (16) in einer Ziehrichtung für den Rohling umgewandelt wird.

5. Vorrichtung nach einem der Ansprüche 2 bis 4, gekennzeichnet durch die Tatsache, daß jede Translationsvorrichtung eine zwischen dem Gestell (15) und einer der Stützen (17) angeordnete Winde (30) umfaßt, von der ein Betrieb eine Bewegung dieser Stütze entlang der Führungsvorrichtungen (16) in einer dem Ziehen des Rohlings entgegengesetzten Richtung steuert.

6. Vorrichtung nach einem der Ansprüche 4 und 5, gekennzeichnet durch die Tatsache, daß die Steuerungsvorrichtung (31) das Motorelement (25), die Greifvorrichtungen (26), die Kupplungen (24) und die Winden (30) steuert.

7. Vorrichtung nach Anspruch 6, gekennzeichnet durch die Tatsache, daß die Steuerungsvorrichtung (31) ebenfalls einen mit dem Motorelement (25) verbundenen Geschwindigkeitsregler in Abhängigkeit vom Durchsatz des Extruders (1) steuert.

8. Vorrichtung nach einem der Ansprüche 1 bis 7, gekennzeichnet durch die Tatsache, daß jede der Greifvorrichtungen (26) eine pneumatisch betätigte, elastische Muffe (28) umfaßt.

9. Vorrichtung nach einem der Ansprüche 1 bis 8, gekennzeichnet durch die Tatsache, daß sie außerdem unter der Zieh-Drehvorrichtung (8) eine Sägeanordnung (9) umfaßt, die ein Sägeblatt (13) aufweist, das von einem entlang der Achse des Rohrrohlings (5) beweglichen Wagen getragen wird, wobei der Wagen mit einer Vorrichtung (33) ausgerüstet ist, um von auf dem Wagen montierten Schuhen (10, 10') getragene Rollen (11) reibend mit dem Rohling zu verbinden.

## Claims

1. Apparatus for the continuous production of a tube provided with helical threads on its inner surface, incorporating an extruder (1) provided with a die (2) having a section complementary of the section of tube to be produced and a tension—rotation means (8) for simultaneously exerting on a tube blank (5) leaving the die a tensile stress and a rotational stress, characterized in that the tension — rotation means comprises at least two gripping devices (26), which can be engaged or disengaged with respect to the outer surface of the blank, a translational means (20-25) able to give each gripping device an alternating translational movement along the blank axis, a rotary means (18, 19) ensuring a rotation of each gripping device about the blank axis during a pulling phase of the translational movement and a control means (31) of the gripping devices (26) and translational means (20-25), whereof an actuation ensures that at least one of the gripping devices is in permanent engagement with the blank and in the pulling phase of the translational movement.

2. Apparatus according to claim 1, characterized in that the tension-rotation means comprises a frame (15) has means (16) for guiding at least two supports (17) parallel to the blank axis, each gripping device (26) being mounted in rotary manner on one of the supports (17), the translational means (20-25) acting on the supports (17) and the rotary means (18, 19) being placed between frame (15) and each of the gripping devices (26).

3. Apparatus according to claim 2, characterized in that the rotary means incorporate a rack (19) connected to frame (15), a pinion mounted on each support (17) and meshed on the rack and a kinematic chain (18) transforming a rotation of each pinion into a rotation of the gripping device (26) mounted on the same support.

4. Apparatus according to either of the claims 2 and 3 characterized in that the translational means incorporate a single motor member (25) provided with an output shaft, whereof a rotation is transformed into a displacement of each support (17) along means (16) for guiding the blank in a pulling direction by a kinematic chain (20-24) incorporating a clutch (24).

5. Apparatus according to any one of the claims 2 to 4, characterized in that each translational means comprises a jack (30) placed between frame (15) and one of the supports (17) and whereof an actuation controls a displacement of said support along means (16) for guiding in a direction opposite to the pulling of the blank.

6. Apparatus according to claims 4 and 5, characterized in that the control means (31) controls the motor member (25), the gripping devices (26), the clutches (24) and the jacks (30).

7. Apparatus according to claim 6, characterized in that the control means (31) also controls a speed variator associated with the motor member (25), as a function of the throughput of extruder (1).

8. Apparatus according to any one of the claims 1 to 7, characterized in that each of the gripping devices (26) has a pneumatically actuated elastic sleeve (28).

9. Apparatus according to any one of the claims 1 to 8, characterized in that it also comprises, downstream of the tension — rotation means (8), a sawing assembly (9) having a saw blade (13) carried by a carriage (12) moving along the axis of the tube blank (5), the carriage being equipped with a means (33) for frictionally engaging against the blank rollers (11) carried by shoes (10, 10') mounted on the carriage.

FIG. 1

FIG. 4

FIG. 5

EP 0 302 922 B1

FIG.2

FIG.3